# EUROPÄISCHE PATENTSCHRIFT

(11) **EP 1 635 981 B1**
(45) Veröffentlichungstag und Bekanntmachung des Hinweises auf die Patenterteilung: **25.04.2018**
(21) Anmeldenummer: 04739662.7
(22) Anmeldetag: 07.06.2004
(51) Int. Cl.: B23K 26/12, F16P 1/06

(54) **LASERKABINE MIT EINER VORRICHTUNG ZUR ABSCHIRMUNG VON KOHÄRENTER ELEKTROMAGNETISCHER STRAHLUNG**
LASER BOOTH WITH A DEVICE FOR SHIELDING COHERENT ELECTROMAGNETIC RADIATION
CABINE LASER COMPRENANT UN DISPOSITIF DE PROTECTION CONTRE LE RAYONNEMENT ELECTROMAGNETIQUE COHERENT

(30) Priorität: 05.06.2003 DE 10325906
(43) Veröffentlichungstag der Anmeldung: 22.03.2006
(73) Patentinhaber: FFT Produktionssysteme GmbH & Co. KG, 36041 Fulda (DE)
(72) Erfinder: Heberer, Erwin Martin, 63150 Heusenstamm (DE)
(74) Vertreter: Schwabe - Sandmair - Marx
(86) Internationale Anmeldenummer: PCT/EP2004/006129
(87) Internationale Veröffentlichungsnummer: WO 2004/108343

(56) Entgegenhaltungen:
- US-A- 5 591 361
- US-A- 6 147 320
- US-A- 6 147 323

## Beschreibung

Die Erfindung betrifft eine Laserkabine mit einer Vorrichtung zur Abschirmung von kohärenter elektromagnetischer Strahlung.

In der Industrie werden vermehrt Quellen für kohärente elektromagnetische Strahlung, wie beispielsweise Laser, zur Materialbearbeitung, wie Schweißen, Löten, Schneiden, und bei der Oberflächenbehandlung eingesetzt. Aus Gründen der Strahlungssicherheit findet dieser Prozess in geschlossenen beziehungsweise gekapselten Kabinen statt. Um jedoch das Werkstück in die Kabine einzubringen, sind Übergabeöffnungen für Roboter oder Transfereinrichtungen, wie Drehtische, erforderlich. Solche Übergabeöffnungen werden mit Roll- oder Hubtoren verschlossen, so dass während des Bearbeitens des Werkstückes eine vollständige Kapselung des·Bearbeitungsraumes erfolgt. Dies ist notwendig, damit die MZB-Werte (maximal zulässige Bestrahlung) außerhalb des Bearbeitungsraumes nicht überschritten werden.

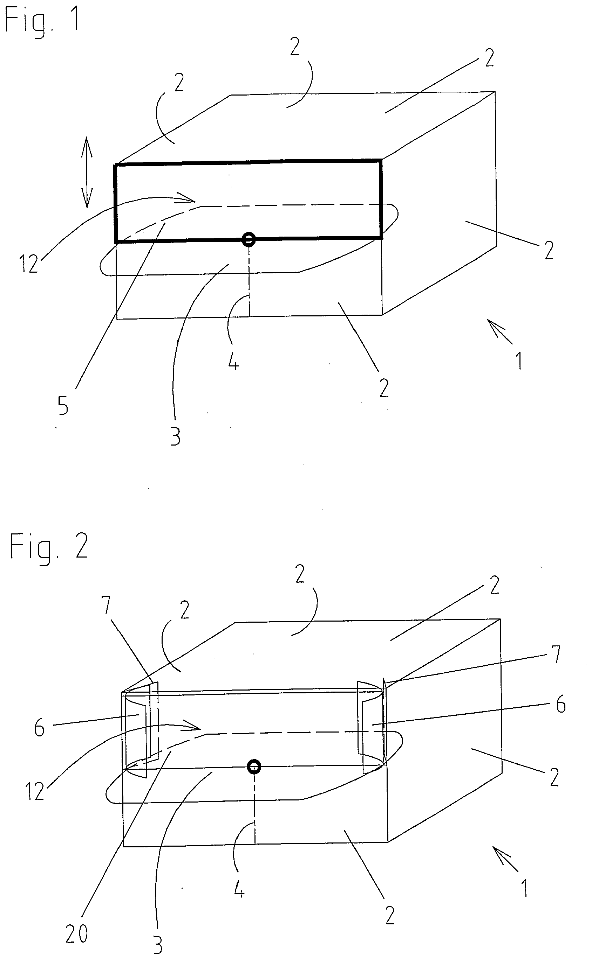

In Figur 1 ist eine Laserkabine nach dem Stand der Technik dargestellt. Die Laserkabine 1 besteht im wesentlichen aus mehreren Laserschutzwänden 2, einem Drehtisch 3 und einem Hubtor 5. Das Hubtor 5 ist in Pfeilrichtung verfahrbar. Der Drehtisch 3 ist bei dem hier dargestellten Ausführungsbeispiel über eine Drehachse 4 derart verdrehbar, dass eine Hälfte des Drehtisches 3 mit einer Aufnahme für ein Werkstück jeweils innerhalb der Laserkabine 1 aufgenommen ist, während die andere Hälfte des Drehtischs 4 mit einer zweiten Aufnahme außerhalb der Laserkabine angeordnet ist. Bevor ein Werkstück durch den Laser in einem Innenraum 12 der Laserkabine 1 bearbeitet wird, wird das Hubtor heruntergefahren, so dass eine vollständige Kapselung des Innenraums 12 der Laserkabine 1 gegenüber der Umgebung erfolgt. In diesem Zustand ist es nicht möglich, dass Laserstrahlung aus dem Innenraum 12 nach außen in die Umgebung gelangt.

Während das Werkstück im Innenraum 12 bearbeitet wird, kann auf die zweite Aufnahme des Drehtisches 3 ein weiteres Werkstück platziert werden, das in einem nachfolgenden Bearbeitungsschritt bearbeitet wird. Bevor jedoch das bearbeitete Werkstück mittels des Drehtisches 3 aus dem Innenraum 12 heraus und das noch nicht bearbeitete Werkstück in den Innenraum 12 herein gedreht wird, muss das Hubtor 5 wieder nach oben verfahren werden, damit eine Übergabeöffnung für die Werkstücke entsteht. Während der Zeit des Öffnens und Schließens des Hubtores 5 der Kabine ist eine Bearbeitung des Werkstückes nicht möglich, was zu entsprechend langen Taktzeiten bei der Produktion führt.

Bereits bekannt sind sogenannte Kegelempfänger für die Messung von Laserenergie, wie beispielsweise aus "Schutz vor optischer Strahlung", Dr. Ernst Sutter, VDE-Verlag GmbH, 2. Auflage, 2002, Seite 83. Dabei werden hohlkegelförmige Absorptionsflächen als Absolutempfänger zur Laserstrahlmessung verwendet. Der Öffnungswinkel des Kegels beträgt weniger als 20°, wobei die zu messende Laserstrahlung parallel zur Kegelachse in den Kegelempfänger eintritt. Im weiteren Verlauf wird die Laserstrahlung zur Spitze des Kegels hin reflektiert. Bei parallel zur Kegelachse eintretender Strahlung ergibt sich die Anzahl Z der Reflexionen, bevor der Strahl wieder aus dem Kegel austritt, bei einem Öffnungswinkel α des Kegels zu Z = 180° / α. Daraus folgt, dass parallel zur Kegelachse einfallende kohärente elektromagnetische Strahlung nicht die Kegelspitze erreichen wird, sondern durch die auftretenden Reflexionen wieder aus der Kegelöffnung heraustritt. Auch wenn der Reflexionsgrad der Absorptionsflächen des Hohlkegels nicht sehr klein ist, tritt in Folge der großen Anzahl von Reflexionen nur ein verschwindend kleiner Bruchteil der Strahlung wieder aus dem Kegel aus.

Aus der US 6 147 323 A ist eine gattungsgemäße Laserkabine bekannt.
Davon ausgehend liegt der Erfindung die Aufgabe zugrunde, eine Laserkabine mit einer Vorrichtung der eingangs genannten Art dahingehend weiter zu entwickeln, dass eine raumsparende Kapselung des Innenraumes der Laserkabine verwirklicht wird. Gelöst wird die Aufgabe durch eine Laserkabine mit den kennzeichnenden Merkmalen des Anspruchs 1.
Vorteilhafte Ausgestaltungen der Erfindung finden sich in den Unteransprüchen.
Erfindungsgemäß laufen zwei Flächen aufeinander zu, die zwischen sich zwei gegenüberliegende Öffnungen bilden, wobei der Abstand der Flächen zwischen den beiden Öffnungen derart variiert, dass ein direkter Durchgang der kohärenten elektromagnetischen Strahlung von der einen Eintrittsöffnung in die andere Öffnung verhindert ist. Somit ist erreicht, dass praktisch keine Strahlung aus einem Arbeitsraum nach außen dringt, ohne dass es einer vollständigen Kapselung des Arbeitsraumes bedarf. Vielmehr wird die kohärente elektromagnetische Strahlung an den aufeinander zulaufenden Flächen in Richtung der Strahlungsquelle zurückreflektiert.

Um einen möglichst hohen Reflexionsgrad an den beiden aufeinander zulaufenden Flächen zu erreichen sollten diese einen Winkel von 10° bis 30°, vorzugsweise ≤ 20°, zwischen sich einschließen.

Konstruktiv besonders günstig ist es, wenn die beiden Flächen · im wesentlichen plan beziehungsweise eben ausgebildet sind.

Nach einer anderen vorteilhaften Ausgestaltung der Erfindung sind die beiden Flächen auf ihren einander zugewandten Seiten konkav und/oder konvex ausgebildet. Auch hierdurch kann der direkte Durchgang der kohärenten elektromagnetischen Strahlung ohne zusätzliche Abschirmmittel verhindert werden.

Denkbar ist natürlich auch, dass die eine Fläche auf ihrer der anderen Fläche zugewandten Seite konkav und die andere Fläche konvex ausgebildet ist.

Eine andere Variation besteht darin, dass die beiden Flächen auf ihren einander zugewandten Seiten konkav oder konvex zueinander verlaufen.

Eine Reflexion der einfallenden kohärenten elektromagnetischen Strahlung in Richtung der Strahlungsquelle lässt sich auch dadurch erreichen, wenn die beiden Flächen auf ihren einander zugewandten Seiten konkav und/oder konvex verlaufende Abschnitte aufweisen.

Nach einer weiteren vorteilhaften Ausgestaltung der Erfindung ist an mindestens einer Fläche wenigstens eine Blende angeordnet. Hierdurch ist durch konstruktiv einfache Mittel eine Redundanz geschaffen, so dass in jedem Fall ein direkter Durchgang der kohärenten elektromagnetischen Strahlung von der Eintrittsöffnung durch die andere Öffnung verhindert ist.

Damit die Rückstrahlung der kohärenten elektromagnetischen Strahlung in Richtung der·Strahlungsquelle möglichst gering gehalten wird, besitzen die Flächen und/oder die mindestens eine Blende eine Oberfläche oder eine Oberflächenbeschichtung aus einem die elektromagnetische Strahlung absorbierenden Material. Dadurch ist sichergestellt, dass die Intensität der Strahlung bei jeder Reflexion an einer der Oberflächen abnimmt. Selbst wenn es zu ungewollten Streuungen der kohärenten elektromagnetischen Strahlung zwischen den beiden Flächen kommen sollte, wird durch diese erfindungsgemäße Maßnahme möglicherweise in die Umgebung austretende Strahlung auf ein für organisches Gewebe nicht schädliches Maß reduziert.

Denkbar ist natürlich auch, dass die Flächen und/oder die wenigstens eine Blende eine verspiegelte Oberfläche oder eine verspiegelte Oberflächenbeschichtung aufweisen, was ebenfalls den Reflexionsgrad der zwischen den aufeinander zulaufenden Flächen eintretenden kohärenten elektromagnetischen Strahlung in Richtung der Strahlungsquelle erhöht.

Nach einem besonderen Gedanken der Erfindung wird die erfindungsgemäße Vorrichtung zur Abschirmung von kohärenter elektromagnetischer Strahlung bei Arbeitsprozessen eingesetzt, bei denen eine vollständige Kapselung nicht möglich beziehungsweise zu zeitintensiv ist. Es ist daher vorgesehen, die erfindungsgemäße Vorrichtung zur Abschirmung von Laserstrahlung an einer Laserkabine zu verwenden.

Dabei ist die Laserkabine mit Laserschutzwänden versehen und weist einen Drehtisch mit wenigstens einer, vorzugsweise wenigstens zwei Aufnahmen zum Fixieren des Werkstücks auf. Auf dem Drehtisch ist eine mitdrehbare Laserschutzwand angeordnet, an deren Randbereichen Abschirmvorrichtungen angeordnet sind.

Die erfindungsgemäßen Abschirmvorrichtungen können an allen zwischen Drehtisch beziehungsweise mitdrehender Laserschutzwand und angrenzender Wandung der Laserkabine sich ergebenden Spalten vorgesehen sein. Selbstverständlich ist es aber auch möglich, je nach Arbeitsbereich des eingesetzten Lasers beispielsweise nur eine seitliche oder zwei seitliche Abschirmvorrichtungen und/oder nur ein oberes oder nur ein unteres oder ein oberes und ein unteres Abschirmelement vorzusehen. Erfindungsgemäß ist an wenigstens einem seitlichen und/oder an wenigstens einem horizontal verlaufenden Randbereich der mitdrehenden Laserschutzwand eine Fläche angeordnet, die mit den benachbarten Laserschutzwänden selbst oder einer daran angeordneten ortsfesten Fläche aufeinander zulaufende Flächen bilden. Insgesamt wird hierdurch eine Reflexion der elektromagnetischen Strahlung in den Innenraum der Laserkabine bewirkt.

Weitere Ziele, Vorteile, Merkmale und Anwendungsmöglichkeiten der vorliegenden Erfindung ergeben sich aus der nachfolgenden Beschreibung eines Ausführungsbeispieles anhand der Zeichnungen.

Es zeigen:
- Figur 1: eine Laserschweißkabine nach dem Stand der Technik,
- Figur 2: eine Laserschweißkabine mit seitlich an einem Drehtisch angeordneten erfindungsgemäßen Vorrichtungen zur Abschirmung kohärenter elektromagnetischer Strahlung,
- Figur 2a: die Laserkabine gemäß Figur 2, wobei an den horizontal verlaufenden Spalten Vorrichtungen zur Abschirmung kohärenter elektromagnetischer Strahlung vorgesehen sind,
- Figur 3: eine vergrößerte Darstellung der erfindungsgemäßen Vorrichtung gemäß Figur 2 in einer Draufsicht,
- Figur 4: eine erfindungsgemäße Vorrichtung gemäß Figuren 2, 2a und 3 mit einer zusätzlichen Blende und
- Figur 5-8: weitere Ausführungsformen der erfindungsgemäßen Vorrichtung.

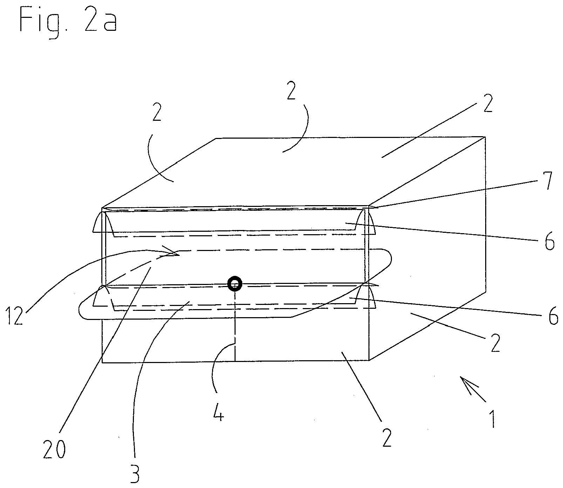

Figur 2 zeigt eine Laserkabine 1, mit einer Vorrichtung, die eine Reflexion der ansonsten austretenden Laserstrahlung zurück in das Kabineninnere 12 bewirkt.

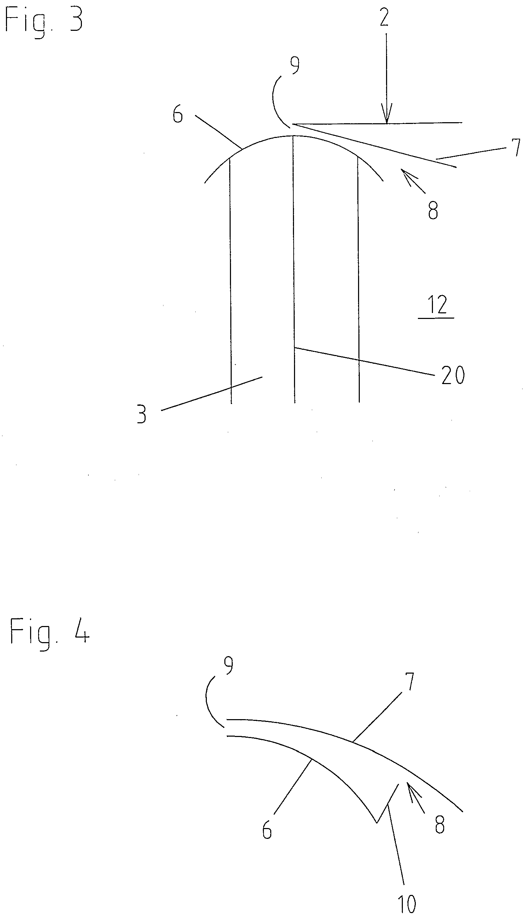

Dabei ist auf einem Drehtisch 3 zur Aufnahme von Werkstücken eine Laserschutzwand 20 fest angeordnet, die mit dem Drehtisch 3 um die Drehachse 4 verdrehbar ist. Damit durch die Öffnungen beziehungsweise Spalten, die sich zwischen der auf dem Drehtisch 3 befindlichen Laserschutzwand 20 und den angrenzenden äußeren Laserschutzwänden 2 ergeben, keine Laserstrahlung nach außen austreten kann, ist an der Laserschutzwand 20 eine Wandung mit einer Fläche 6 angeordnet. Diese Fläche 6 läuft, wie der Figur 3 zu entnehmen ist, auf eine zweite Fläche 7 zu, die an der äußeren Laserschutzwand 2 angeordnet ist. Durch die beiden Flächen 6, 7 werden zwei Öffnungen 8 und 9 definiert, wobei mit Bezugszeichen 8 die aus dem Kabineninneren 12 kommende Laserstrahlung bezeichnet ist.

Die Krümmungen der Flächen 6 und 7 sind dabei so bemessen, dass bei einem Drehen des Drehtisches 3 um die Drehachse 4 die Fläche 7 beziehungsweise die entsprechende Wandung außerhalb des Kollisionsradiusses des Drehtisches 3 liegt.

Durch die konvexe Ausbildung der Fläche 6 und die konkave Ausbildung der Fläche 7 auf ihren einander zugewandten Seiten ist erreicht, dass kohärente elektromagnetische Strahlung nicht aus dem Innenraum 12 der Laserkabine nach außen heraustreten kann. Vielmehr wird die Strahlung an den Flächen 6 oder 7 mehrfach reflektiert, bis es zu einer Rückreflexion der Strahlung in den Innenraum 12 kommt. Die Krümmungsradien der miteinander wechselwirkenden Flächen 6, 7 sind dabei so gewählt, dass zwischen ihren Tangenten ein Winkel von ≤ 20° gebildet ist.

Vorteilhafterweise sind an allen sich zwischen Drehtisch 3 beziehungsweise der mit dem Drehtisch 3 mitdrehenden Laserschutzwand 20 und den angrenzenden Wandungen 2 der Laserkabine 1 sich ergebenden Spalten jeweils Vorrichtungen zum Abschirmen der Laserstrahlung vorgesehen. Der besseren Übersichtlichkeit wegen sind in Figur 2 lediglich die an der mitdrehenden Laserschutzwand 20 seitlich angeordneten Flächen 6 und die damit korrespondierenden Flächen 7 an den vertikalen Wandungen 2 der Laserkabine 1 dargestellt. In Figur 2a ist die Anordnung der Fläche 6 an dem oberen horizontal verlaufenden Randbereich der mitdrehenden Laserschutzwand 20, die zugeordnete Fläche 7 an der oberen Öffnungsberandung der Laserkabine 1 und die Fläche 6 an der unteren Öffnungsberandung der Kabinenwandung 2 dargestellt, wobei hier die zugeordnete Fläche 7 durch die Wandung des Drehtisches 3 selbst gebildet ist.

Die Flächen 6 und 7 besitzen dabei eine Oberfläche oder eine Oberflächenbeschichtung, die aus einem elektromagnetische Strahlung absorbierenden Material besteht. Denkbar ist es natürlich auch, dass die Flächen eine spiegelnde Oberfläche aufweisen. Durch den hohen Absorptionsgrad der Flächen 6 und 7 ist die Strahlung nach mehreren Reflexionen jedenfalls derart abgeschwächt, dass die Intensität der Strahlung nicht mehr ausreicht, organisches Gewebe zu schädigen.

Um den Absorptionsgrad der elektromagnetischen Strahlung zwischen den Flächen 7 und 6 weiter zu erhöhen und damit die Intensität der kohärenten elektromagnetischen Strahlung abermals abzuschwächen, können, wie in Figur 4 dargestellt, zusätzlich Blenden 10 vorgesehen sein. Dabei ist der Eintrittswinkel für die kohärente elektromagnetische Strahlung vor dem Auftreffen auf eine der Flächen 6 oder 7 so groß gewählt, dass es für die durch die Öffnung 8 eintretende kohärente elektromagnetische Strahlung aufgrund der Mehrfachreflexion und der sich dabei ergebenden Rückreflexion nicht·mehr möglich ist, in die Nähe der Öffnung 9 zu gelangen. Durch den hohen Absorptionsgrad der Oberflächen der Flächen 6 und 7 und gegebenenfalls auch der Blende 10 ist darüber hinaus die Intensität der in den Innenraum zurück reflektierten Strahlung sehr gering.

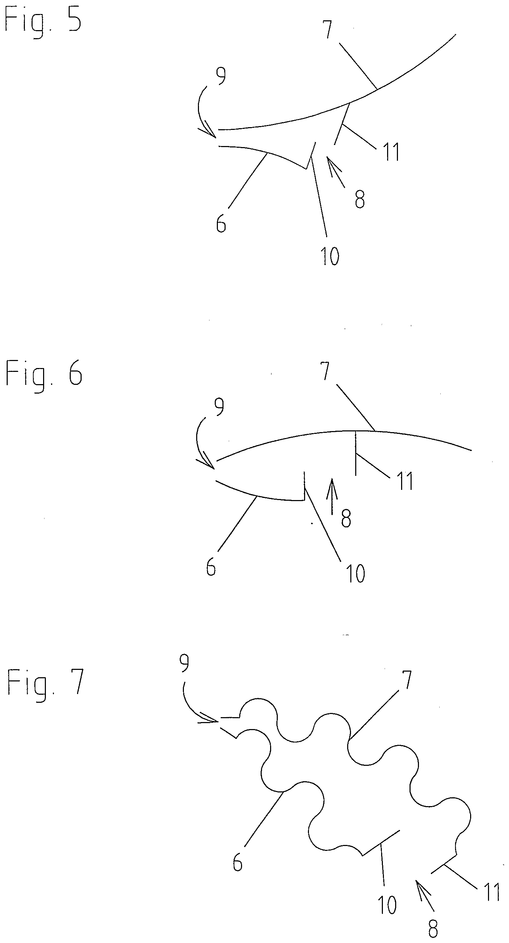

Die Figuren 5 bis 8 zeigen weitere Ausführungsbeispiele der Erfindung mit unterschiedlichen Ausgestaltungen von aufeinander zulaufenden Flächen 6 und 7. So laufen die Flächen 6, 7 in Figur 5 konvex-konvex und in Figur 6 konkav-konkav aufeinander zu. Figur 7 zeigt dagegen Flächen 6 und 7, die sowohl konkave als auch konvexe Elemente enthalten. Dabei sind jeweils zwei Blenden 10 und 11 dargestellt, die einen direkten Durchgang der kohärenten elektromagnetischen Strahlung durch die Öffnungen 8 und 9 verhindern.

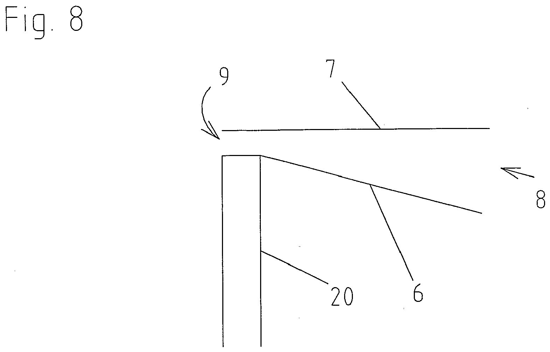

In Figur 8 sind die aufeinander zulaufenden Flächen 6, 7 beziehungsweise entsprechende Wandelemente im wesentlichen eben ausgebildet, was gegenüber den anderen Ausführungsformen einen erheblichen konstruktiven Vorteil darstellt.

Weiterhin ist es denkbar, die erfindungsgemäße Vorrichtung zur Abschirmung von kohärenter elektromagnetischer Strahlung bei allen Arbeitsprozessen zu verwenden, bei denen eine vollständige Kapselung nicht möglich beziehungsweise aus wirtschaftlichen Gründen zu zeitintensiv ist. So kann die erfindungsgemäße Vorrichtung beispielsweise auch bei Türen zum Einsatz kommen, bei denen ebenfalls der Austritt kohärenter elektromagnetischer Strahlung aus einem eine Strahlungsquelle aufweisenden Innenraum, vermieden werden muss.

### Bezugszeichenliste

- 1: Laserschutzkabine
- 2: Laserschutzwand
- 3: Drehtisch
- 4: Drehachse
- 5: Hubtor
- 6: Fläche
- 7: Fläche
- 8: Öffnung
- 9: Öffnung
- 10: Blende
- 11: Blende
- 12: Innenraum
- 20: Laserschutzwand

## Patentansprüche

1. Laserkabine (1) mit
(a) äußeren Laserschutzwänden (2),
(b) einem Drehtisch (3) mit wenigstens einer Aufnahme für ein zu bearbeitendes Werkstück,
(c) einer an dem Drehtisch (3) angeordneten, mitdrehenden Laserschutzwand (20),
(d) einer Abschirmvorrichtung, die an einem seitlichen oder horizontal verlaufenden Randbereich der mitdrehenden Laserschutzwand (20) angeordnet ist und der Abschirmung von Laserstrahlung dient.
(e) wobei die Abschirmvorrichtung wenigstens zwei Flächen (6, 7) aufweist, von denen eine am seitlichen oder horizontal verlaufenden Randbereich der mitdrehenden Laserschutzwand (20) angeordnet ist und die andere von einer der äußeren Laserschutzwände (2) gebildet wird oder an einer der äußeren Laserschutzwände (2) angeordnet ist,
**dadurch gekennzeichnet, dass**
(f) zwischen den wenigstens zwei Flächen (6, 7) zwei gegenüberliegende Öffnungen (8, 9) gebildet sind, nämlich eine erste Öffnung (8), die einem Innenraum (12) der Laserkabine (1) zugewandt ist, und eine zweite Öffnung (9), die der äußeren Umgebung der Laserkabine (1) zugewandt ist,
(g) die beiden Flächen (6, 7) zumindest abschnittsweise von der ersten Öffnung (8) in Richtung auf die zweite Öffnung (9) aufeinander zulaufen, und
(h) der Abstand der Flächen (6, 7) zwischen den beiden Öffnungen (8, 9) derart variiert, dass ein direkter Durchgang der elektromagnetischen Strahlung von der einen Öffnung (8) in die andere Öffnung (9) verhindert ist, indem durch die erste Öffnung (8) eintretende Laserstrahlung an den wenigstens zwei Flächen (6, 7) in den Innenraum (12) zurückreflektiert wird.

2. Laserkabine nach Anspruch 1, **dadurch gekennzeichnet, dass** die beiden Flächen (6, 7) einen Winkel von 10° bis 30°, vorzugsweise 20°, zwischen sich einschließen.

3. Laserkabine nach einem der vorhergehenden Ansprüche, **dadurch gekennzeichnet, dass** die beiden Flächen (6, 7) auf ihren einander zugewandten Seiten konkav und/oder konvex ausgebildet sind.

4. Laserkabine nach einem der vorhergehenden Ansprüche, **dadurch gekennzeichnet, dass** die eine Fläche (6 beziehungsweise 7) auf ihrer der anderen Fläche (7 beziehungsweise 6) zugeordneten Seite konkav und die andere Fläche (7 beziehungsweise 6) konvex ausgebildet ist.

5. Laserkabine nach einem der vorhergehenden Ansprüche, **dadurch gekennzeichnet, dass** die beiden Flächen (6, 7) auf ihren einander zugewandten Seiten konkav und/oder konvex zueinander verlaufen.

6. Laserkabine nach einem der vorhergehenden Ansprüche, **dadurch gekennzeichnet, dass** die beiden Flächen (6, 7) auf ihren einander zugewandten Seiten konkav und/oder konvex verlaufende Abschnitte aufweisen.

7. Laserkabine nach einem der vorherigen Ansprüche, **dadurch gekennzeichnet, dass** jede der beiden Flächen (6, 7) konkave und konvexe Elemente aufweist.

8. Laserkabine nach einem der Ansprüche 1 und 2, **dadurch gekennzeichnet, dass** die beiden Flächen (6, 7) im Wesentlichen plan sind.

9. Laserkabine nach einem der vorherigen Ansprüche, **dadurch gekennzeichnet, dass** wenigstens eine Fläche (6, 7) eine Oberfläche aus einem elektromagnetische Strahlung absorbierenden Material aufweist.

10. Laserkabine nach einem der vorherigen Ansprüche, **dadurch gekennzeichnet, dass** an mindestens einer Fläche (6, 7) wenigstens eine Blende (10, 11) vorgesehen ist.

11. Laserkabine nach dem vorhergehenden Anspruch, **dadurch gekennzeichnet, dass** die mindestens eine Blende (10, 11) eine Oberfläche aus einem elektromagnetische Strahlung absorbierenden Material aufweist.

12. Laserkabine nach einem der vorhergehenden Ansprüche, **dadurch gekennzeichnet, dass** die Flächen (6, 7) und/oder die wenigstens eine Blende (10, 11) eine verspiegelte Oberfläche oder eine verspiegelte Oberflächenbeschichtung aufweisen.

13. Laserkabine nach einem der vorhergehenden Ansprüche, **dadurch gekennzeichnet, dass** an wenigstens einem seitlichen und/oder an wenigstens einem horizontal verlaufenden Randbereich der mitdrehenden Laserschutzwand (20) eine Fläche (6) angeordnet ist beziehungsweise sind, die mit den benachbarten Laserschutzwänden (2) selbst oder daran angeordneten ortsfesten Flächen (7) die beiden aufeinander zulaufenden Flächen (6, 7) bildet bzw. bilden.

## Claims

1. A laser booth (1), comprising:
(a) external laser protection walls (2);
(b) a turntable (3) comprising at least one receptacle for a workpiece to be machined;
(c) a laser protection wall (20) which is arranged on the turntable (3) and rotates with it;
(d) a shielding device which is arranged on a lateral or horizontally extending peripheral region of the jointly rotating laser protection wall (20) and serves to shield against laser radiation;
(e) wherein the shielding device comprises at least two faces (6, 7), one of which is arranged on the lateral or horizontally extending peripheral region of the jointly rotating laser protection wall (20) and the other of which is formed by or arranged on one of the external laser protection walls (2),
**characterised in that:**
(f) two opposing openings (8, 9) are formed between the at least two faces (6, 7), namely a first opening (8) which faces an interior (12) of the laser booth (1), and a second opening (9) which faces the external environment of the laser booth (1);
(g) the two faces (6, 7) converge, at least in portions, from the first opening (8) towards the second opening (9); and
(h) the distance between the faces (6, 7) varies between the two openings (8, 9) in such a way that a direct passage of electromagnetic radiation from one opening (8) to the other opening (9) is prevented, **in that** laser radiation entering through the first opening (8) is reflected back into the interior (12) at the at least two faces (6, 7).

2. The laser booth according to Claim 1, **characterised in that** the two faces (6, 7) enclose an angle of 10° to 30°, preferably 20°.

3. The laser booth according to any one of the preceding claims, **characterised in that** the mutually facing sides of the two faces (6, 7) are embodied to be concave and/or convex.

4. The laser booth according to any one of the preceding claims, **characterised in that** one face (6 or 7, respectively) is embodied to be concave on its side associated with the other face (7 or 6, respectively), and the other face (7 or 6, respectively) is embodied to be convex.

5. The laser booth according to any one of the preceding claims, **characterised in that** the two faces (6, 7) extend concavely and/or convexly with respect to each other on their mutually facing sides.

6. The laser booth according to any one of the preceding claims, **characterised in that** the two faces (6, 7) comprise concavely and/or convexly extending portions on their mutually facing sides.

7. The laser booth according to any one of the previous claims, **characterised in that** each of the two faces (6, 7) comprises concave and convex elements.

8. The laser booth according to any one of Claims 1 and 2, **characterised in that** the two faces (6, 7) are substantially planar.

9. The laser booth according to any one of the previous claims, **characterised in that** at least one face (6, 7) comprises a surface made of a material which absorbs electromagnetic radiation.

10. The laser booth according to any one of the previous claims, **characterised in that** at least one baffle (10, 11) is provided on at least one face (6, 7).

11. The laser booth according to the preceding claim, **characterised in that** the at least one baffle (10, 11) comprises a surface made of a material which absorbs electromagnetic radiation.

12. The laser booth according to any one of the preceding claims, **characterised in that** the faces (6, 7) and/or the at least one baffle (10, 11) comprise(s) a reflective surface or reflective surface coating.

13. The laser booth according to any one of the preceding claims, **characterised in that** a face (6) is arranged on at least one lateral and/or horizontally extending peripheral region of the jointly rotating laser protection wall (20), and the two converging faces (6, 7) are formed by said face and the adjacent laser protection walls (2) themselves or spatially fixed faces (7) arranged on them.

## Revendications

1. Cabine laser (1) comportant :
(a) des parois de protection laser extérieures (2),
(b) un plateau tournant (3) ayant au moins un évidement pour une pièce à usiner,
(c) une paroi de protection laser (20) agencée sur le plateau tournant (3) et entraînée en rotation avec celui-ci,
(d) un dispositif de blindage qui est agencé sur une zone périphérique latérale ou s'étendant horizontalement de la paroi de protection laser (20) conjointement entraînée en rotation, et qui sert de protection contre le rayonnement laser,
(e) dans laquelle le dispositif de blindage comporte au moins deux faces (6, 7) dont l'une est agencée sur la zone périphérique latérale ou s'étendant horizontalement de la paroi de protection laser (20) conjointement entraînée en rotation, et l'autre est formée par l'une des parois de protection laser extérieures (2) ou est agencée sur l'une des parois de protection laser extérieures (2),
**caractérisée en ce que**
(f) entre lesdites au moins deux faces (6,7) sont formées deux ouvertures opposées (8, 9), à savoir une première ouverture (8) qui est dirigée vers une chambre intérieure (12) de la cabine laser (1), et une seconde ouverture (9) qui est dirigée vers l'environnement extérieur de la cabine laser (1),
(g) les deux faces (6, 7) convergent au moins en partie à partir de la première ouverture (8) en direction de la seconde ouverture (9), et
(h) la distance des faces (6, 7) entre les deux ouvertures (8, 9) varie de sorte qu'un passage direct du rayonnement électromagnétique de la première ouverture (8) dans l'autre ouverture (9) est empêché, le rayonnement laser pénétrant à travers la première ouverture (8) étant réfléchi dans la chambre intérieure (12) sur lesdites au moins deux faces (6, 7).

2. Cabine laser selon la revendication 1, **caractérisée en ce que** les deux faces (6, 7) forment entre elles un angle de 10° à 30°, de préférence de 20°.

3. Cabine laser selon l'une des revendications précédentes, **caractérisée en ce que** les deux faces (6, 7) sont formées de manière concave et/ou convexe sur leurs côtés dirigés l'un vers l'autre.

4. Cabine laser selon l'une des revendications précédentes, **caractérisée en ce que** la première face (6 ou respectivement 7) est formée de manière concave sur son côté associé à l'autre face (7 ou respectivement 6) et l'autre face (7 ou respectivement 6) est formée de manière convexe.

5. Cabine laser selon l'une des revendications précédentes, **caractérisée en ce que** les deux faces (6, 7) s'étendent de manière concave et/ou convexe l'une par rapport à l'autre sur leurs côtés dirigés l'un vers l'autre.

6. Cabine laser selon l'une des revendications précédentes, **caractérisée en ce que** les deux faces (6, 7) comportent des parties s'étendant de manière concave et/ou convexe sur leurs côtés dirigés l'un vers l'autre.

7. Cabine laser selon l'une des revendications précédentes, **caractérisée en ce que** chacune des deux faces (6, 7) comporte des éléments concaves et convexes.

8. Cabine laser selon l'une des revendications 1 et 2, **caractérisée en ce que** les deux faces (6, 7) sont sensiblement planes.

9. Cabine laser selon l'une des revendications précédentes, **caractérisée en ce qu'**au moins une face (6, 7) comporte une surface constituée d'un matériau absorbant le rayonnement électromagnétique.

10. Cabine laser selon l'une des revendications précédentes, **caractérisée en ce qu'**au moins un déflecteur (10, 11) est prévu sur au moins une face (6, 7).

11. Cabine laser selon la revendication précédente, **caractérisée en ce que** ledit au moins un déflecteur (10, 11) comporte une surface constituée d'un matériau absorbant le rayonnement électromagnétique.

12. Cabine laser selon l'une des revendications précédentes, **caractérisée en ce que** les faces (6, 7) et/ou le au moins un déflecteur (10, 11) comportent une surface réfléchissante ou un revêtement de surface réfléchissant.

13. Cabine laser selon l'une des revendications précédentes, **caractérisée en ce que** sur au moins une zone périphérique latérale et/ou sur au moins une zone périphérique s'étendant horizontalement de la paroi de protection laser (20) conjointement entraînée en rotation est (sont) agencée (s) une (des) face(s) (6) qui forme(nt) elle(s)-même(s) avec les parois de protection laser voisines (2) ou avec les surfaces fixes (7) agencées sur celle(s)-ci, les deux faces (6, 7) convergeant l'une vers l'autre.
